# EUROPEAN PATENT SPECIFICATION

(11) **EP 2 898 387 B1**
(45) Date of publication and mention of the grant of the patent: **12.10.2016**
(21) Application number: 13770628.9
(22) Date of filing: 19.09.2013
(51) Int. Cl.: G05D 16/10

(54) **A DIFFERENTIAL PRESSURE CONTROL VALVE**
DIFFERENZIALDRUCKREGELVENTIL
SOUPAPE DE RÉGLAGE À PRESSION DIFFÉRENTIELLE

(30) Priority: 20.09.2012 DK 201270579
(43) Date of publication of application: 29.07.2015
(73) Proprietor: FRESE A/S, 4200 Slagelse (DK)
(72) Inventor: JØRGENSEN, Ole, DK-4200 Slagelse (DK); KAMPF, Lars Verner, DK-4700 Næstved (DK)
(74) Representative: Awapatent A/S
(86) International application number: PCT/DK2013/050298
(87) International publication number: WO 2014/044282

(56) References cited:
- WO-A1-90/01657
- WO-A1-2006/136158
- WO-A2-2009/135490

## Description

The invention relates to a differential pressure control valve for maintaining a substantially constant differential pressure over a device, such as a heating or cooling convector, or a circuit of a number of devices, such as comprising several heating or cooling convectors, comprising
a valve housing with an upstream inlet for connection to a capillary tube communicating with an upstream flow, i.e. a flow upstream from said device or circuit, a valve inlet for communicating with a downstream flow, i.e. a flow downstream from said device or circuit, and a valve outlet, the upstream inlet extending into the valve housing from outside of the valve housing, and
a pressure maintaining arrangement for maintaining a substantially constant differential pressure between an upstream pressure and a downstream pressure, said arrangement comprising a diaphragm and a valve member movable along an axis of the valve, the valve member by means of the diaphragm being adapted to set itself in a balance between the upstream pressure on the one hand and the downstream pressure as well as a spring force on the other hand, the spring force being provided by means of a spring member positioned on a side opposite to the valve inlet in relation to the valve member,
the valve member at a lower end facing a valve seat, which is fixed in relation to the housing, the valve member abutting the valve seat in a closed position of the valve and being movable such as to vary an opening area of an opening between the lower end of the valve member and the valve seat, establishing fluid communication between the valve inlet and the valve outlet depending on the balance setting of the valve member,
the downstream flow in use entering into the valve through an inlet orifice.

Differential pressure control valves (DPCVs) of this type are known in the art and are typically applied to keep differential pressure constant over for example heating or cooling convectors in liquid circulation heating or cooling plants, for example in residential property or apartment buildings. As is known to the skilled person, keeping the differential pressure constant has a number of advantages, such as noise reduction and improved flow control.

In one prior art DPCV of this type the diaphragm of the pressure maintaining arrangement is in the form of a relatively large diameter disc diaphragm. The upstream inlet is positioned above the diaphragm and connects the valve with an inlet to the device, system or circuit over which it is desired to maintain a constant differential pressure. A lower part of a centrally provided valve member of relatively small diameter abuts a similarly centrally provided valve seat of relatively small diameter to open and close an opening between the valve inlet and the valve outlet. The lower part of the valve member is shaped like a solid frustum of a cone, i.e. with a chamfered circumferentially extending surface and a lower, plane surface. The chamfered surface of the lower part of the valve member abuts the valve seat positioned below, whereby axial movement of the valve member varies the distance between skirt and valve seat and thus size of the opening between valve inlet and valve outlet. The downstream flow enters an interior of the valve in an axial direction through an inlet orifice and thus exerts an axial flow force on the lower, plane surface as well as on the chamfer of the valve member.

In such DPCVs it is desired that the upstream and downstream forces (as well as the spring force) are the only forces working on the diaphragm and valve member since otherwise a less precise pressure differential regulation or control is achieved. In the above prior art DPCV the contribution from the flow forces exerted on the valve member on the axial position of the valve member is sought to be minimized by the provision of a relatively large diameter diaphragm. With a large diaphragm the contribution to the overall equilibrium of forces of the forces exerted on its upper and lower surfaces are similarly larger, thus to some extent negating the influence of the flow forces.

WO 90/01657 A1 discloses a valve according to the precharacterizing portion of claim 1.

On this background the object of the present invention is to provide a DPCV that can be made smaller and/or has improved features.

This object is achieved by means of a valve according to the introduction, which is characterized in that
a first member in the form of either the valve member or the valve seat comprises a circumferentially extending skirt, which is located at an end facing the other, opposite member in the form of the valve seat or the valve member, respectively, an inner diameter of the skirt being smaller than an outer diameter of the opposite member, the flow passing between the first member and the opposite member through said opening in a generally radially outwards direction,
the skirt comprises an abutment surface facing an opposing surface of said opposite member, the abutment surface extending in said generally radial direction, an inner surface of the skirt extending in a generally axial direction and facing the downstream flow for blocking or closing off part of or all flow through said opening, and an outer surface opposed to the inner surface facing the valve outlet flow and extending at an angle to the abutment surface, and
an inner corner formed between said abutment surface and said inner surface is chamfered or establishes a non-linear transition between the abutment surface and the inner surface, said chamfer or transition extending less than a distance of 0.1 mm from the inner surface in a direction towards the abutment surface and less than a distance of 0.1 mm from the abutment surface in a direction towards the inner surface.

In the following explanation of the advantages and effects of the invention it is presumed that the first member is in the form of the valve member, and the second, opposing member is in the form of the valve seat. The skilled person will realize that similar or comparable advantages and effects are achieved in embodiments, in which the first member is the valve seat, and the second member the valve member.

The valve according to the present invention functions in a way somewhat similar to the above-described prior art DPCV. Upstream water enters into the valve housing via a capillary tube and is led to a volume above the diaphragm where upstream pressure is exerted on the upper surface of the diaphragm. Since the flow direction of flow through the opening area between the skirt and the valve seat will be generally radial, i.e. at a substantially right angle to the inner surface of the lower part of the skirt, and the chamfer or transition at the corner between the inner surface and the abutment surface of the skirt is extremely small (less than 0.1 mm in each direction), almost no axial flow forces are exerted on the valve member. More specifically, the axial component of the flow forces exerted on the valve member will be close to zero.

Therefore, the need to compensate for the contribution of the axial flow forces exerted on the valve member is very small, and the radial extent or the diameter of the diaphragm can be made substantially smaller than what is the case in the prior art DPCV. Hereby, the overall size of the DPCV according to the invention can similarly be made significantly smaller; and even with a relatively small diaphragm size it is possible to achieve differential pressure control, which is improved over the prior art.

The dependent claims define preferred embodiments of the invention.

In one embodiment said abutment surface extents a distance (C) less than 0.5 mm, preferably less than 0.3 mm, more preferred less than 0.15 mm, most preferred less than 0.1 mm towards the outer surface of the skirt. If the flow through the opening between skirt and valve seat is in a generally radial direction, a small extent of the abutment surface ensures that the flow forces exerted on it will be minimal. In this context it is noted that, as will be recognizable by the skilled person, in most or all cases the flow within the valve will not be entirely radial or entirely axial since the complex most often turbulent flow within the valve will mean that force components of the flow will also be inserted in many other, varying directions. Along this line the expressions "generally radially" or "generally axially" refers to the overall flow direction and are not to be construed literally.

In another embodiment the size of an inner diameter of the lower part of the skirt is between 0.2 to 0.9, preferably between 0.3 to 0.8, more preferred 0.4 to 0.7 times the size of a diameter of the inlet orifice. Hereby is provided a minimum distance between the edge of the inlet orifice and the edge of the lower part of the skirt so that the flow direction is substantially radial, i.e. at a substantially right angle to the inner surface of the lower part of the skirt, when it reaches this. Furthermore, the skirt should not have a too large diameter so as to keep the overall size of the DPCV relatively small.

In another embodiment the spring force of said spring member, which is preferably in the form of a helical spring, is adjustable, preferably by means of a threaded spindle, which is rotatable from at an outer end positioned at the top of the valve. Hereby the substantially constant value of the differential pressure can be adjusted.

An exemplary embodiment of the present invention will be described in the following with reference to the schematic drawings in which
Fig. 1 is a front view of an embodiment of the DPCV according to the invention,
Fig. 2 is a side view of the DPCV according to Fig. 1 seen from the right,
Fig. 3 is a perspective view of the DPCV according to Fig. 1,
Fig. 4 is an perspective view of the DPCV according to Fig. 1, in which a valve insert is shown separated or dismounted from the other part of the valve,
Fig. 5 is a sectional view of the DPCV according to Fig. 1 taken through the plane V-V (axis a) in Fig. 1,
Fig. 6 is an exploded view of the valve insert according to Fig. 4 shown in perspective,
Fig. 7 is an enlarged view of an embodiment of the detail D shown in Fig. 5,
Fig. 8 is an enlarged view of another embodiment of the detail D shown in Fig. 5,
Fig. 9 is a diagrammatic view of a system or circuit comprising a DPCV according to Fig. 1, and
Fig 10 is a view corresponding to the view of Fig. 8 in an alternative embodiment of the DPCV according to the invention.

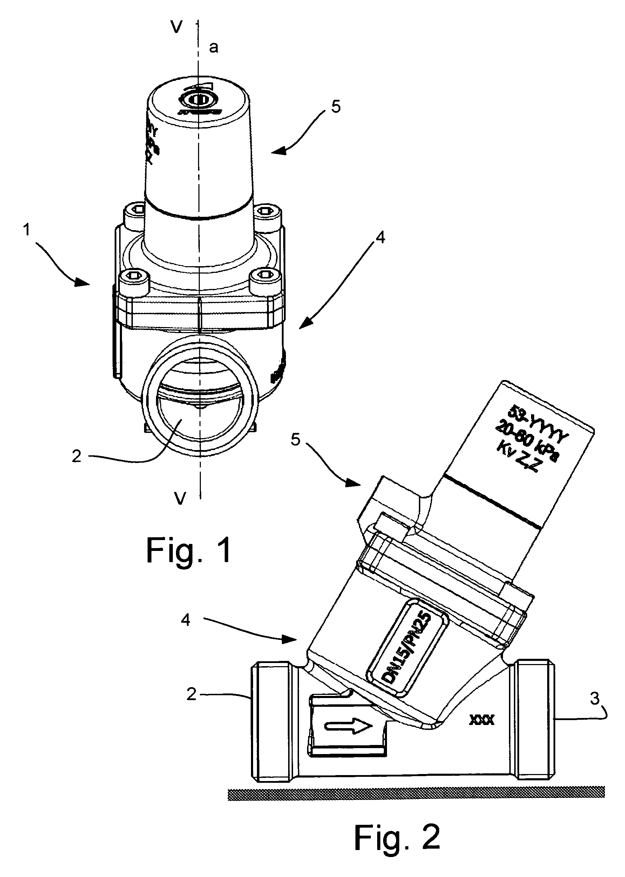

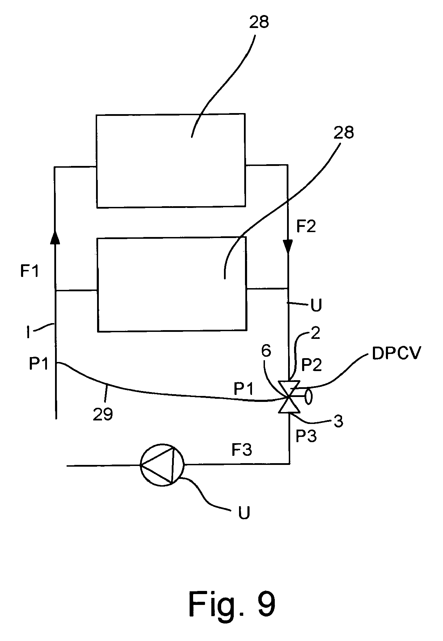

In Figs 1 to 6 an embodiment of a DPCV according to the invention is shown in different views. The DPCV is adapted for maintaining a substantially constant differential pressure over a device, such as a heating or cooling convector, or a circuit of a number of devices, such as comprising several heating or cooling convectors. The functioning of the DPCV will be explained in more detail further below with reference to Fig. 9.

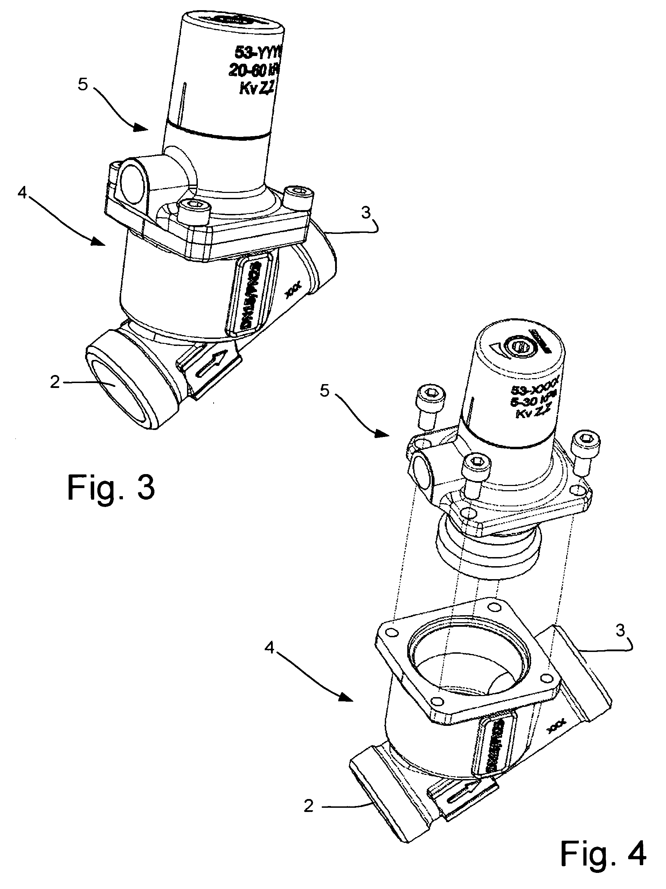

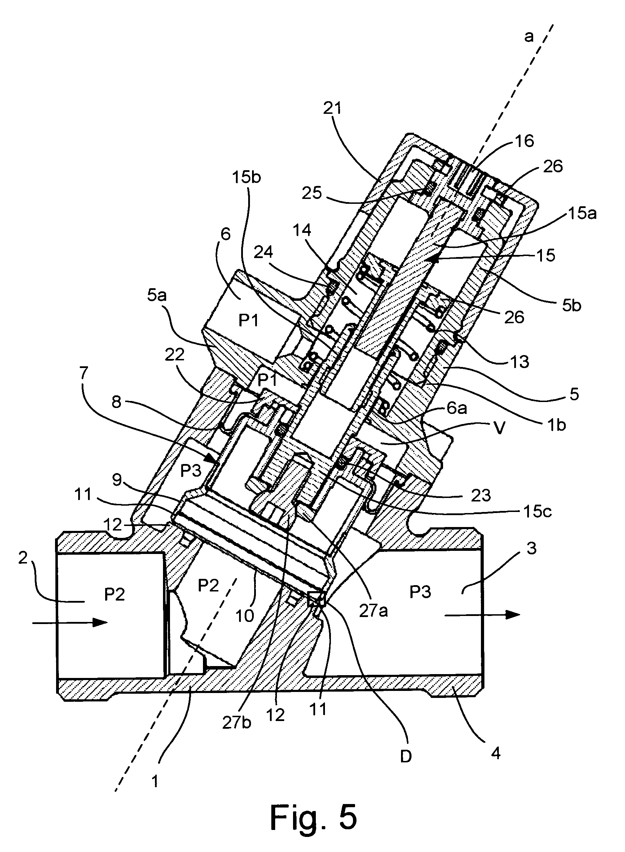

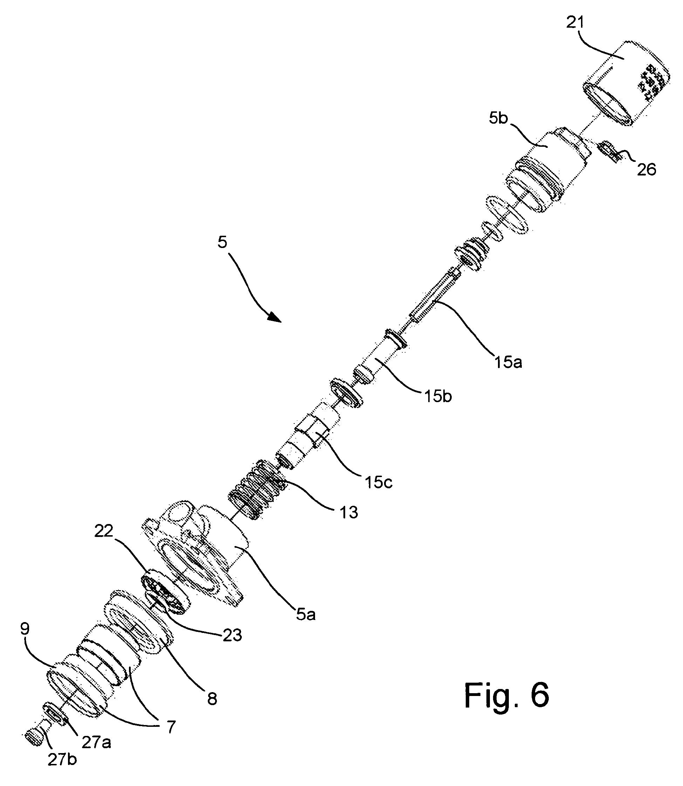

In the valve of Figs 1 to 6 a valve housing 1 consists of a lower part 4 and an upper part 5, the upper part 5 encasing a replaceable valve insert comprising a pressure maintaining arrangement for maintaining a substantially constant differential pressure between an upstream pressure P1 and a downstream pressure P2 (Fig. 5). The valve insert is shown separated from the housing part 4 in Fig. 4 and in exploded view in Fig. 6.

The upper housing part 5 comprises to upper housing portions 5a and 5b. The upper housing part 5, specifically portion 5a, comprises an upstream inlet 6 for connection to a capillary tube (not shown) communicating with the upstream flow F1 (Fig. 9), i.e. the flow upstream from the device or circuit. In a mounted position the upstream inlet 6 connects the valve housing 1 with an inlet I to the device, system or circuit over which the valve maintains a constant differential pressure (Fig. 9). The valve inlet 2 communicates with a downstream flow F2 entering the valve from a downstream outlet U from the device, system or circuit over which the valve maintains a constant differential pressure (Fig. 9), i.e. a flow downstream from said device or circuit. The valve outlet 3 communicates with an outlet flow F3. The upstream inlet 6 extends into the upper housing part 5 from outside of the valve housing 1 on a side opposite to the valve inlet 2 when seen in relation to a valve member 7.

The valve member 7 forms part of the pressure maintaining arrangement, which also comprises a roller diaphragm 8. The valve member 7 is movable along a central axis a (Figs 1 and 5) of the valve, the valve member by means of the diaphragm 8 being adapted to set itself in a balance between the upstream pressure P1 on the one hand and the downstream pressure P2 as well as a spring force on the other hand.

As is seen best in Figs 5 and 6 the valve member 7 is shaped like a cup (which is in two parts), the lower part of which forming a circumferentially extending skirt 9, the downstream flow F2 in use entering in a generally axial direction into an interior of the housing 1 and an interior or hollow of the cup through a circumferentially extending inlet orifice 10, which is coaxial with the axis a, and passing below the skirt 9 in a generally radially outwards direction (which extends at a right angle to the axis a). The outer diameter of the diaphragm 8 (28 mm) is a little below twice the diameter of the inlet orifice 10 (14 mm).

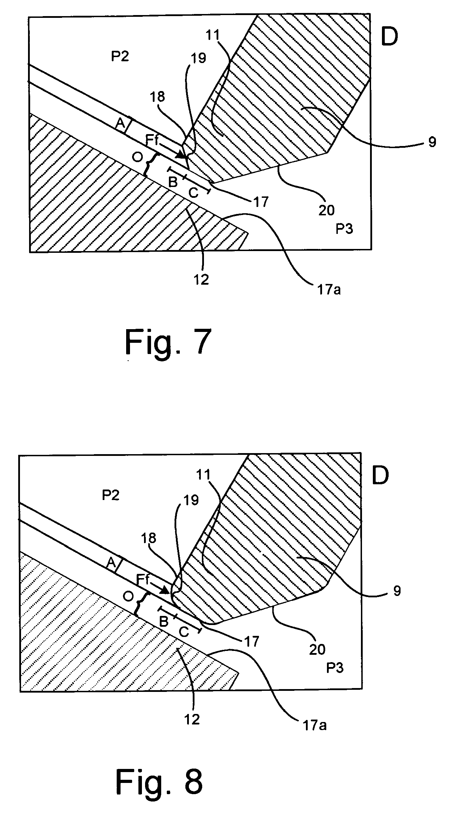

The skirt 9 comprises a circumferentially extending lower part 11 (Figs 5, 7 and 8) facing a circumferentially extending valve seat 12, which is fixed in relation to the housing 1, the lower part 11 being axially movable together with the valve member such as to vary an area of an opening O (Figs 7 and 8) between the skirt 9 and the valve seat 12, establishing fluid communication between the valve inlet 2 and the valve outlet 3 depending on the balance setting, i.e. the position in the axial direction of the valve member 7.

The circumferentially extending diaphragm 8 has an outer circumferential edge, which is fixed in a groove between the lower and upper housing parts 4, 5, and an inner circumferential edge, which is fixed in a groove of the valve member 7 (Fig. 5). Hereby the inner edge moves with the valve member 7, whereas the outer edge is fixed in relation to the housing 1. A mean diameter size measured between an outer diameter size and an inner diameter size of the diaphragm 8 is substantially equal to the size of an inner diameter of the lower part 11 of the skirt 9. The size of an outer diameter of the diaphragm 8 (28 mm) is about 1.1 times the size of an inner diameter of the lower part 11 of the skirt 9 (25.5 mm).

Liquid and thus pressure from the capillary tube entering into the upstream inlet 6 communicates with a narrow, circumferentially extending channel 6a and a volume V above the diaphragm 8.

The spring force is provided by means of a spring member in the form of a (helical) spring 13 positioned on a side opposite to the valve inlet 2 in relation to the valve member 7, more specifically within a hollow interior 14 in the upper housing part 5. The spring force of the spring 13 is adjustable by means of an adjustment device 15, which may be rotated by means of insertion of a key into slot or orifice 16 at the outer end of the device 15. The adjustment device 15 further comprises a hexagonal rod 15a positioned inside spindle 15b, which again is positioned inside spindle casing 15c. The spring 13 is positioned encompassing the device 15 coaxially with axis a. The spring 13 urges the valve member 7 towards its top position in cooperation with the downstream pressure P2, against the upstream pressure exerted on top of the valve member 7 and diaphragm 8.

In use, a balance is established between the inlet pressure P1 and the outlet pressure P2 plus the spring force from the spring 13. The differential pressure across the device, system or circuit at the downstream end of which the DPCV is installed will therefore be constant with a given spring force, the latter being variable.

The DPCV shown in the figures also comprises a number of other parts such as gaskets, screws and casings, the general structure and function of which will be immediately understandable to the skilled person when considering the drawings. These include (plastic) cap 21, diaphragm retaining ring 22, O-ring gaskets 23, 24 and 25, locking clip 26, washer 27a, and retaining screw 27b.

Figs 7 and 8 show a detail D of Fig. 5, more specifically the area in which the lower part 11 of the skirt 9 of the valve member 7 is positioned opposed to the valve seat 12. In Figs 5, 7 and 8 the DPCV is shown in an open position in which liquid is allowed to pass the valve seat 12 from the downstream flow F2 of the valve inlet 2 to the outlet flow F3 at the valve outlet 3. The lower part 11 comprises an abutment surface 17 extending in a radial direction for axial movement towards and away from an opposed surface 17a of the valve seat 12. An inner surface 18 of the lower part 11 extends in a direction parallel to axis a to face the downstream flow F2 of pressure P2 and thus block or close off part of or all flow through opening O between the lower part 11 and the valve seat 12 depending on the axial position of the valve member 7. An outer surface 20 of the lower part 11 is located opposed to the inner surface 18 facing the valve outlet flow F3 and extending about 0.5 to 1 mm, more specifically about 0.7 mm, at an angle of about 45 degrees to the abutment surface 17 until it reaches a further surface that extends upwards in a direction parallel to the axis a. An inner corner formed between the abutment surface 17 and the inner surface 18 is chamfered to establish a linear (Fig. 7) or non-linear (Fig. 8) transition 19 between the abutment surface 17 and the inner surface 18, said chamfer or transition 19 extending less than a distance of 0.1 mm from the abutment surface 17 in a direction towards the inner surface 18. The transition 19 follows the lower part 11 to extend circumferentially about axis a.

In Fig. 8 the transition 19 is shown as curved. The corner or transition 19 may have other shapes than linear or curved, often it will in reality have a somewhat "undefined" shape because of the extremely small dimensions of the corner. This also applies to the other corners shown in Figs 7 and 8; in Fig. 8 the two corners at the ends of surface 20 are also shown as curved.

According to the present invention the important feature of the corner or transition 19 is that it is very small (i.e. the corner is extremely pointed or sharp) such as to minimize the axial component of a flow force Ff exerted on it (Figs 7, 8). In the optimum situation the size of the corner or transition 19 would be zero; however, in reality this is very difficult or impossible to manufacture. The chamfer or transition 19 extends less than a distance A of 0.1 mm from the inner surface 18 in a direction towards the abutment surface 17 and less than a distance B of 0.1 mm from the abutment surface 17 in a direction towards the inner surface 18. Due to the limitations of the manufacture techniques of today, a good compromise between a small transition 19 (i.e. a pointed or sharp corner) and manufacturing costs is about 0.03 to 0.08 mm, preferably 0.03 to 0.06 mm. In the context of measuring how much the transition or chamfer 19 extents, generally the chamfer or transition can be defined as starting where a general angle of the surface (i.e., the chamfer surface) differs with an angle of more than about 5 degrees from a general direction of the inner 18, respectively the lower 17 surface of the lower part 11 of the skirt 9. This definition also applies to the claims.

In the embodiment shown the distances A, B are both approximately 0.05 mm, whereby a relation between the distances A, B, respectively, to an inner diameter of an inlet pipe (not shown) leading to the valve inlet 2, corresponding to the inner diameter of the valve inlet 2 (Ø 19.5 mm), is about 0.26 % for both (note that in the embodiment shown both valve inlet 2 and valve outlet 3 each are provided with inner threading for connection with inlet and outlet pipes, respectively). A relation between the distances A, B, respectively, to the inner diameter of the lower part 11 of the skirt 9 (25.5 mm) is similarly about 0.2 % for both. Furthermore, the size of the diameter of the lower part 11 of the skirt 9 (25.5 mm) is about 1.8 times the size of the diameter of the orifice inlet (14 mm).

The abutment surface 17 extends a distance C of about 0.06 to 0.1 mm towards the outer surface of the skirt 9. Similar to the transition 19, it is preferable that the lower 17 surface is very small to minimize flow forces exerted on it.

Reverting to an example of the functioning or purpose of the DPCV according to the present invention and as shown in the previous figures, Fig. 9 shows part of a system or circuit of a heating plant of a residential building with two heating or cooling convectors 28 positioned in parallel.

The upstream inlet 6 connects via a capillary tube 29 the DPCV housing 1, specifically the housing portion 5a, with an inlet I to the system. The valve inlet 2 communicates with a downstream flow F2 entering the DPCV from a downstream outlet U from the system, i.e. a flow downstream from the system. Flow is achieved by means of pump U. The valve outlet 3 communicates with an outlet flow F3 from the DPCV. As is visible also in Fig. 9 the pressure at the flows F1, F2 and F3 are defined as P1, P2 and P3, respectively.

Referring also to Figs 1 to 8, upstream liquid (water) from flow F1 enters (or, more precisely, the pressure is carried over) into the valve housing 1 via the capillary tube 29 and is led to the volume V above the diaphragm 8 via channel 6a, where upstream pressure P1 is exerted on the upper surface of the diaphragm 8. Hereby, the DPCV maintains a substantially constant differential pressure over the system, i.e. between P1 and P2. The value of the constant differential pressure is determined by the setting of the spring 13. In this context, please note that in each of the different locations or group of interior spaces in the valve system in which the pressures have been denoted P1, P2 and P3 in the above, the pressure can in reality be expected to vary to a certain degree. The above explanation of the relationship between the pressure inside the system is thus somewhat simplified compared to the actual conditions within the system. However, the overall functional descriptions are accurate.

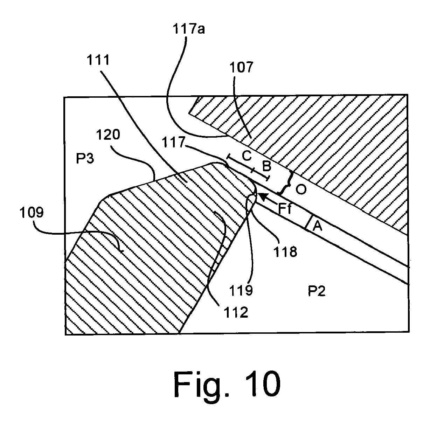

Fig. 10 shows a view corresponding to that of Fig. 8 in an alternative embodiment of the DPCV according to the invention. More specifically, the view is a detail of the opposite, lower side of the valve member 11 compared to the detail D in Fig. 8 in an alternative embodiment of the DPCV shown in Fig. 5.

In Fig. 10, 100 has been added the reference numbers of elements with reference numbers functionally corresponding to the reference numbers of elements in the previous embodiment.

Now, in the embodiment of Fig. 10, in contrast to the previous embodiment the valve seat 112 comprises a skirt 109, and the second, opposing member is in the form of the valve member 107. An upper part 111 of the skirt 109 is embodied and shaped similarly to the lower part 11 of the skirt 9 in the previous embodiment, and thus comprises abutment surface 117, inner surface 118, outer surface 120 and transition 119, which in function all correspond to the corresponding reference numbers of the previous embodiment. An inner diameter of the skirt 109 is smaller than an outer diameter of the lower part of the valve member 107. The valve member 107 (or at least the lower part of this) is in this case a solid member, specifically a solid cylinder, i.e. with a plane bottom surface denoted 117a in Fig. 10. This bottom surface 117a extends on the entire lower surface of the valve member, but could in principle comprise one or more indentations or be cup-shaped similar to the previous embodiment. The opening O as well as the distances A, B and C also correspond to those in the previous embodiment.

The skilled person understands that a DPCV corresponding to the above alternative embodiment advantages and effects similar to or comparable to those of the first embodiment will be achieved.

## Claims

1. A differential pressure control valve for maintaining a substantially constant differential pressure over a device, such as a heating or cooling convector, or a circuit of a number of devices, such as comprising several heating or cooling convectors, comprising
a valve housing with an upstream inlet for connection to a capillary tube communicating with an upstream flow, i.e. a flow upstream from said device or circuit, a valve inlet for communicating with a downstream flow, i.e. a flow downstream from said device or circuit, and a valve outlet, the upstream inlet extending into the valve housing from outside of the valve housing, and
a pressure maintaining arrangement for maintaining a substantially constant differential pressure between an upstream pressure and a downstream pressure, said arrangement comprising a diaphragm and a valve member movable along an axis of the valve, the valve member by means of the diaphragm being adapted to set itself in a balance between the upstream pressure on the one hand and the downstream pressure as well as a spring force on the other hand, the spring force being provided by means of a spring member positioned on a side opposite to the valve inlet in relation to the valve member,
the valve member at a lower end facing a valve seat, which is fixed in relation to the housing, the valve member abutting the valve seat in a closed position of the valve and being movable such as to vary an opening area of an opening between the lower end of the valve member and the valve seat, establishing fluid communication between the valve inlet and the valve outlet depending on the balance setting of the valve member,
the downstream flow in use entering into the valve through an inlet orifice,
**characterized in that**
a first member (11, 12) in the form of either the valve member (11) or the valve seat (12) comprises a circumferentially extending skirt (9), which is located at an end facing the other, opposite member (12, 11) in the form of the valve seat (12) or the valve member (11), respectively, an inner diameter of the skirt (9) being smaller than an outer diameter of the opposite member (12, 11), the flow passing between the first member (11, 12) and the opposite member (12, 11) through said opening (O) in a generally radially outwards direction,
the skirt comprises an abutment surface (17) facing an opposing surface (17a) of said opposite member (12, 11), the abutment surface (17a) extending in said generally radial direction, an inner surface (18) of the skirt (9) extending in a generally axial direction and facing the downstream flow (F2) for blocking or closing off part of or all flow through said opening (O), and an outer surface (20) opposed to the inner surface (18) facing the valve outlet flow (F3) and extending at an angle to the abutment surface (17), and
an inner corner formed between said abutment surface (17) and said inner surface (18) is chamfered or establishes a non-linear transition (19) between the abutment surface (17) and the inner surface (18), said chamfer or transition (19) extending less than a distance (A) of 0.1 mm from the inner surface (18) in a direction towards the abutment surface (17) and less than a distance (B) of 0.1 mm from the abutment surface (17) in a direction towards the inner surface (18).

2. A control valve according to claim 1, wherein at least one, preferably both said distances (A, B) of the chamfer or transition is/are less than 0.08 mm, preferably less than 0.07 mm, more preferred less than 0.06 mm, most preferred less than 0.05 mm.

3. A control valve according to any one of claims 1 or 2, wherein said abutment surface extents a distance (C) less than 0.5 mm, preferably less than 0.3 mm, more preferred less than 0.15 mm, most preferred less than 0.1 mm towards the outer surface of the skirt.

4. A control valve according to any one of claims 1, 2 or 3, wherein a relation between said distances (A, B) of the chamfer or transition, respectively, to an inner diameter of an inlet pipe of the housing leading to the valve inlet is in an interval of 0.04 to 0.8 % for both, preferably 0.06 to 0.7 %, more preferred 0.1 to 0.6 %, more preferred 0.2 to 0.5 %.

5. A control valve according to any one of claims 1 to 4, wherein a relation between said distances (A, B) of the chamfer or transition in the direction towards the abutment surface and in the direction towards the inner surface, respectively, to the inner diameter of the skirt is in an interval of 0.04 - 0.5 % for both, preferably 0.06 to 0.4%, more preferred 0.1 to 0.3 %.

6. A control valve according to any one of claims 1 to 5, wherein the size of an inner diameter of the lower part of the skirt is between 0.2 to 0.9, preferably between 0.3 to 0.8, more preferred 0.4 to 0.7 times the size of a diameter of the inlet orifice (10).

7. A control valve according to any one of claims 1 to 6, wherein the diaphragm is a rolling diaphragm with an outer circumferential edge, which is preferably fixed to the housing, and an inner circumferential edge, which is preferably fixed to the valve member,
a mean diameter size measured between an outer diameter size and an inner diameter size of the diaphragm preferably being substantially equal to the size of a diameter of the lower part of the skirt, and/or
the size of an outer diameter of the diaphragm preferably extending in an interval of 1 to 6 times a diameter of the inlet orifice, and/or
the size of an outer diameter of the diaphragm preferably being less than 1.3 times, more preferred less than 1.2 times, most preferred less than 1.1 times the size of a diameter of the lower part of the skirt.

8. A control valve according to any one of claims 1 to 7, wherein the spring force of said spring member, which is preferably in the form of a helical spring, is adjustable, preferably by means of a threaded spindle, which is rotatable from at an outer end positioned at the top of the valve.

9. A control valve according to any one of claims 1 to 7, wherein, similar to the spring member, the upstream inlet is positioned on said side opposite to the valve inlet when seen in relation to the valve member.

10. A control valve according to any one of claims 1 to 9, wherein the pressure maintaining arrangement is in the form of a separately provided valve insert that may be mounted in the housing so as to form an assembled control valve, the pressure maintaining arrangement preferably being replaceable.

11. A control valve according to any one of the previous claims, wherein the first member (11, 12) is in the form of the valve member (11), and the second, opposing member (12, 11) is in the form of the valve seat (12).

## Patentansprüche

1. Differenzialdrucksteuerventil zum Halten eines im Wesentlichen konstanten Differenzialdrucks über eine Vorrichtung, wie etwa einen Heiz- oder Kühlkonvektor oder ein Kreis aus einer Anzahl von Vorrichtungen, wie etwa solche, die mehrere Heiz- oder Kühlkonvektoren umfassen, das Folgendes umfasst:
ein Ventilgehäuse mit einem Aufwärtseinlass für eine Verbindung mit einer Kapillarröhre, die mit einem Aufwärtsstrom, d. h. einem Strom von der Vorrichtung oder dem Kreis stromaufwärts, kommuniziert, einem Ventileinlass für die Kommunikation mit einem Abwärtsstrom, d. h. einem Strom von der Vorrichtung oder dem Kreis stromabwärts, und einem Ventilauslass, wobei sich der Aufwärtseinlass von außerhalb des Ventilgehäuses in das Ventilgehäuse erstreckt,
eine Druckhalteanordnung zum Halten eines im Wesentlichen konstanten Differenzialdrucks zwischen einem Aufwärtsdruck und einem Abwärtsdruck, wobei die Anordnung aus einer Membran und einem Ventilelement, das entlang einer Achse des Ventils beweglich ist, besteht, wobei das Ventilelement mit Hilfe der Membran dafür ausgelegt ist, sich selbst auf ein Gleichgewicht zwischen dem Aufwärtsdruck einerseits und dem Abwärtsdruck als auch einer Federkraft andererseits einzustellen, wobei die Federkraft mit Hilfe eines Federelements, das auf einer Seite gegenüber dem Ventileinlass in Beziehung zu dem Ventilelement positioniert ist, geliefert wird,
wobei das Ventilelement an einem unteren Ende einem Ventilsitz zugewandt ist, der in Beziehung auf das Gehäuse festgelegt ist, wobei das Ventilelement in einer geschlossenen Position des Ventils an dem Ventilsitz anliegt und derart beweglich ist, dass es einen Öffnungsbereich einer Öffnung zwischen dem unteren Ende des Ventilelements und dem Ventilsitz variiert, wodurch abhängig von der Gleichgewichtseinstellung des Ventilelements eine Fluidkommunikation zwischen dem Ventileinlass und dem Ventilauslass eingerichtet wird,
wobei der Abwärtsstrom im Gebrauch durch eine Einlassöffnung in das Ventil eintritt,
**dadurch gekennzeichnet, dass**
ein erstes Element (11, 12) in der Form entweder des Ventilelements (11) oder des Ventilsitzes (12) einen sich in Umfangsrichtung erstreckenden Rand (9) umfasst, der sich an einem Ende befindet, das dem anderen gegenüberliegenden Element (12, 11) in der Form des Ventilsitzes (12) oder des Ventilelements (11) jeweils zugewandt ist, wobei ein innerer Durchmesser des Randes (9) kleiner als ein äußerer Durchmesser des gegenüberliegenden Elements (12, 11) ist, wobei der Strom zwischen dem ersten Element (11, 12) und dem gegenüberliegenden Element (12, 11) durch die Öffnung (O) in einer Richtung im Allgemeinen radial nach außen hindurchführt,
wobei der Rand eine Anlagefläche (17) umfasst, die einer gegenüberliegenden Fläche (17a) des gegenüberliegenden Elements (12, 11) zugewandt ist, wobei sich die Anlagefläche (17a) im Wesentlichen in einer radialen Richtung erstreckt, wobei sich eine innere Fläche (18) des Rands (9) in einer im Wesentlichen axialen Richtung erstreckt und dem Aufwärtsstrom (F2) zugewandt ist, um einen Teil des Stroms oder den gesamten Strom durch die Öffnung (O) zu blockieren oder abzusperren, und eine äußere Fläche (20), die der inneren Fläche (18) gegenüberliegt, dem Ventilauslassstrom (F3) zugewandt ist und sich in einem Winkel zu der Anlagefläche (17) erstreckt und
eine innere Ecke, die zwischen der Anlagefläche (17) und der inneren Fläche (18) gebildet ist, abgekantet ist oder einen nicht geradlinigen Übergang (19) zwischen der Anlagefläche (17) und der inneren Fläche (18) bildet, wobei sich die Abkantung oder der Übergang (19) um weniger als eine Strecke (A) von 0,1 mm von der inneren Fläche (18) in Richtung der Anlagefläche (17) und um weniger als eine Strecke (B) von 0,1 mm von der Anlagefläche (17) in der inneren Fläche (18) erstreckt.

2. Steuerventil nach Anspruch 1, wobei mindestens eine, vorzugsweise beide Strecken (A, B) der Abkantung oder des Übergangs weniger als 0,08 mm, vorzugsweise weniger als 0,07 mm, mehr bevorzugt weniger als 0,06 mm, am meisten bevorzugt weniger als 0,05 mm, betragen.

3. Steuerventil nach einem der Ansprüche 1 oder 2, wobei sich die Anlagefläche um eine Strecke (C) von weniger als 0,5 mm, vorzugsweise weniger als 0,3 mm, stärker bevorzugt weniger als 0,15 mm, am meisten bevorzugt weniger als 0,1 mm, in Richtung der äußeren Fläche des Rands erstreckt.

4. Steuerventil nach einem der Ansprüche 1, 2 oder 3, wobei eine Beziehung zwischen den Strecken (A, B) der Abkantung oder des Übergangs jeweils zu einem inneren Durchmesser eines Einlassrohrs des Gehäuses, das zu dem Ventileinlass führt, in einem Intervall von 0,04 bis 0,8 % für beide, vorzugsweise 0,06 bis 0,7 %, stärker bevorzugt 0,1 bis 0,6 %, am meisten bevorzugt 0,2 bis 0,5 %, liegt.

5. Steuerventil nach einem der Ansprüche 1 bis 4, wobei eine Beziehung zwischen den Strecken (A, B) der Abkantung oder des Übergangs in Richtung der Anlagefläche und in Richtung der inneren Fläche jeweils zu dem inneren Durchmesser des Rands in einem Intervall von 0,04-0,5 % für beide, vorzugsweise 0,06 bis 0,4 %, stärker bevorzugt 0,1 bis 0,3 % liegt.

6. Steuerventil nach einem der Ansprüche 1 bis 5, wobei die Größe eines inneren Durchmessers des unteren Teils des Rands zwischen 0,2 und 0,9, vorzugsweise zwischen 0,3 und 0,8, stärker bevorzugt zwischen 0,4 und 0,7 mal der Größe eines Durchmessers der Einlassöffnung (10) liegt.

7. Steuerventil nach einem der Ansprüche 1 bis 6, wobei die Membran eine rollende Membran ist, die eine äußere Umfangskante, die vorzugsweise an dem Gehäuse befestigt ist, und eine innere Umfangskante, die vorzugsweise an dem Ventilelement befestigt ist, aufweist,
eine mittlere Durchmessergröße, die zwischen einer Größe des äußeren Durchmessers und einer Größe des inneren Durchmessers der Membran gemessen wird, vorzugsweise im Wesentlichen gleich der Größe eines Durchmessers des unteren Teils des Rands ist und/oder
die Größe eines äußeren Durchmessers der Membran sich vorzugsweise in einem Intervall von 1 bis 6 mal einem Durchmesser der Einlassöffnung erstreckt und/oder
die Größe eines äußeren Durchmessers der Membran vorzugsweise kleiner als 1,3 mal, stärker bevorzugt kleiner als 1,2 mal, am meisten bevorzugt kleiner als 1,1 mal die Größe eines Durchmessers des unteren Teils des Rands beträgt.

8. Steuerventil nach einem der Ansprüche 1 bis 7, wobei die Federkraft des Federelements, das vorzugsweise die Form einer Schraubenfeder hat, vorzugsweise mit Hilfe einer Gewindespindel, die von einem äußeren Ende, das an der Oberseite des Ventils positioniert ist, drehbar ist, anpassbar ist.

9. Steuerventil nach einem der Ansprüche 1 bis 7, wobei der Aufwärtseinlass ähnlich dem Federelement, wenn in Beziehung auf das Ventilelement betrachtet, auf der Seite gegenüber dem Ventileinlass positioniert ist.

10. Steuerventil nach einem der Ansprüche 1 bis 9, wobei die Druckhalteanordnung die Form eines getrennt bereitgestellten Ventileinsatzes hat, der in dem Gehäuse angebracht werden kann, um ein zusammengesetztes Steuerventil zu bilden, wobei die Druckhalteanordnung vorzugsweise austauschbar ist.

11. Steuerventil nach einem der vorhergehenden Ansprüche, wobei das erste Element (11, 12) die Form des Ventilelements (11) hat und das zweite gegenüberliegende Element (12, 11) die Form des Ventilsitzes (12) hat.

## Revendications

1. Soupape de régulation de pression différentielle destinée à maintenir une pression différentielle sensiblement constante à travers un dispositif, par exemple un convecteur de chauffage ou de refroidissement, ou un circuit d'une multiplicité de dispositifs, comportant par exemple plusieurs convecteurs de chauffage ou de refroidissement, comportant
un corps de soupape doté d'une entrée amont servant au raccordement à un tube capillaire communiquant avec un écoulement amont, c.à.d. un écoulement en amont dudit dispositif ou circuit, une entrée de soupape servant à communiquer avec un écoulement aval, c.à.d. un écoulement en aval dudit dispositif ou circuit, et une sortie de soupape, l'entrée amont s'étendant jusque dans le corps de soupape à partir de l'extérieur du corps de soupape, et
un agencement de maintien de pression servant à maintenir une pression différentielle sensiblement constante entre une pression à l'amont et une pression à l'aval, ledit agencement comportant un diaphragme et un élément de soupape mobile suivant un axe de la soupape, l'élément de soupape étant prévu pour se placer, au moyen du diaphragme, dans un équilibre entre la pression à l'amont d'une part et la pression à l'aval ainsi qu'une force élastique d'autre part, la force élastique étant fournie au moyen d'un élément de ressort positionné d'un côté opposé à l'entrée de soupape par rapport à l'élément de soupape,
l'élément de soupape, à une extrémité inférieure, faisant face à un siège de soupape qui est fixe par rapport au corps, l'élément de soupape portant sur le siège de soupape dans une position fermée de la soupape et pouvant être déplacé de façon à faire varier une section d'ouverture d'une ouverture entre l'extrémité inférieure de l'élément de soupape et le siège de soupape, établissant une communication fluidique entre l'entrée de soupape et la sortie de soupape en fonction du réglage de l'équilibre de l'élément de soupape, l'écoulement aval, en cours d'utilisation, pénétrant dans la soupape à travers un orifice d'entrée, **caractérisé en ce que**
un premier élément (11, 12) sous la forme soit de l'élément (11) de soupape, soit du siège (12) de soupape comporte une jupe (9) s'étendant circonférentiellement, qui est situé à une extrémité faisant face à l'autre élément opposé (12, 11) sous la forme du siège (12) de soupape ou de l'élément (11) de soupape, respectivement, un diamètre intérieur de la jupe (9) étant plus petit qu'un diamètre extérieur de l'élément opposé (12, 11), l'écoulement passant entre le premier élément (11, 12) et l'élément opposé (12, 11) à travers ladite ouverture (O) dans une direction généralement radialement vers l'extérieur,
la jupe comporte une surface (17) de portée faisant face à une surface opposée (17a) dudit élément opposé (12, 11), la surface (17a) de portée s'étendant dans ladite direction généralement radiale, une surface intérieure (18) de la jupe (9) s'étendant dans une direction généralement axiale et faisant face à l'écoulement aval (F2) pour obturer ou fermer une partie ou la totalité de l'écoulement à travers ladite ouverture (O), et une surface extérieure (20) opposée à la surface intérieure (18) faisant face à la sortie de soupape flow (F3) et s'étendant suivant un angle par rapport à la surface (17) de portée, et
un coin intérieur formé entre ladite surface (17) de portée et ladite surface intérieure (18) est chanfreiné ou établit une transition non linéaire (19) entre la surface (17) de portée et la surface intérieure (18), ledit chanfrein ou ladite transition (19) s'étendant sur moins d'une distance (A) de 0,1 mm à partir de la surface intérieure (18) en direction de la surface (17) de portée et sur moins d'une distance (B) de 0,1 mm à partir de la surface (17) de portée en direction de la surface intérieure (18).

2. Soupape de régulation selon la revendication 1, au moins une, de préférence les deux distances susmentionnées (A, B) du chanfrein ou de la transition étant inférieures à 0,08 mm, de préférence inférieures à 0,07 mm, de façon plus préférentielle inférieures à 0,06 mm, idéalement inférieures à 0,05 mm.

3. Soupape de régulation selon l'une quelconque des revendications 1 et 2, ladite surface de portée s'étendant sur une distance (C) inférieure à 0,5 mm, de préférence inférieure à 0,3 mm, de façon plus préférentielle inférieure à 0,15 mm, idéalement inférieure à 0,1 mm vers la surface extérieure de la jupe.

4. Soupape de régulation selon l'une quelconque des revendications 1, 2 et 3, une relation entre lesdites distances (A, B) du chanfrein ou de la transition, respectivement, et un diamètre intérieur d'une conduite d'entrée du corps menant à l'entrée de soupape se situant dans un intervalle de 0,04 à 0,8% pour les deux, de préférence 0,06 à 0,7%, de façon plus préférentielle 0,1 à 0,6%, de façon plus préférentielle 0,2 à 0,5%.

5. Soupape de régulation selon l'une quelconque des revendications 1 à 4, une relation entre lesdites distances (A, B) du chanfrein ou de la transition en direction de la surface de portée et en direction de la surface intérieure, respectivement, et le diamètre intérieur de la jupe se situant dans un intervalle de 0,04 à 0,5% pour les deux, de préférence 0,06 à 0,4%, de façon plus préférentielle 0,1 à 0,3%.

6. Soupape de régulation selon l'une quelconque des revendications 1 à 5, la dimension d'un diamètre intérieur de la partie intérieure de la jupe se situant entre 0,2 et 0,9, de préférence entre 0,3 et 0,8, de façon plus préférentielle 0,4 et 0,7 fois la dimension d'un diamètre de l'orifice (10) d'entrée.

7. Soupape de régulation selon l'une quelconque des revendications 1 à 6, le diaphragme étant un diaphragme roulant doté d'un bord circonférentiel extérieur, qui est de préférence fixé au corps, et d'un bord circonférentiel intérieur, qui est de préférence fixé à l'élément de soupape,
une dimension de diamètre moyen mesurée entre une dimension de diamètre extérieur et une dimension de diamètre intérieur du diaphragme étant de préférence sensiblement égale à la dimension d'un diamètre de la partie intérieure de la jupe, et/ou
la dimension d'un diamètre extérieur du diaphragme de préférence se situant dans un intervalle de 1 à 6 fois un diamètre de l'orifice d'entrée, et/ou la dimension d'un diamètre extérieur du diaphragme étant de préférence inférieure à 1,3 fois, de façon plus préférentielle inférieure à 1,2 fois, idéalement inférieure à 1,1 fois la dimension d'un diamètre de la partie intérieure de la jupe.

8. Soupape de régulation selon l'une quelconque des revendications 1 à 7, la force élastique dudit élément de ressort, qui se présente de préférence sous la forme d'un ressort hélicoïdal, étant réglable, de préférence au moyen d'un axe fileté, qui peut être tournée à partir d'une extrémité extérieure positionnée au sommet de la soupape.

9. Soupape de régulation selon l'une quelconque des revendications 1 à 7, l'entrée amont étant, de façon similaire à l'élément de ressort, positionnée sur ledit côté opposé à l'entrée de soupape lorsqu'elle est vue par rapport à l'élément de soupape.

10. Soupape de régulation selon l'une quelconque des revendications 1 à 9, l'agencement de maintien de pression se présentant sous la forme d'un insert de soupape rapporté qui peut être monté dans le corps de façon à former une soupape de régulation assemblée, l'agencement de maintien de pression de préférence étant remplaçable.

11. Soupape de régulation selon l'une quelconque des revendications précédentes, le premier élément (11, 12) se présentant sous la forme de l'élément (11) de soupape, et le deuxième élément opposé (12, 11) se présentant sous la forme du siège (12) de soupape.
